(19) **Europäisches Patentamt**

**European Patent Office**

**Office européen des brevets**

(11) Publication number: **0 460 283 A1**

(12) # EUROPEAN PATENT APPLICATION

(21) Application number: **90122051.7**

(22) Date of filing: **17.11.90**

(51) Int. Cl.5: **H01G 1/14**

(30) Priority: **06.06.90 IT 8340290**

(43) Date of publication of application:
**11.12.91 Bulletin 91/50**

(84) Designated Contracting States:
**AT BE CH DE DK ES FR GB GR LI LU NL SE**

(71) Applicant: **Ducati Energia S.p.A.**
**Via Marco Emilio Lepido, 182**
**I-40132 Bologna(IT)**

(72) Inventor: **Venturini, Luci, c/o Ducati Energia**
**S.P.A.**
**Via Marco Emilio Lepido 182**
**I-40132 Bologna(IT)**

(74) Representative: **D'Agostini, Giovanni, Dr.**
**D'AGOSTINI ORGANIZZAZIONE n. 17 via**
**G.Giusti**
**I-33100 Udine(IT)**

(54) **Electric connection system for capacitors with tongue plug.**

(57) An electric connection system with yelding material plug (A) for capacitors (B) with tongue/faston (7) characterized in that to provide in the connection head of the capacitor:
- two protruding beveled clogs (7) from which the respective connection faston tongues (7) extend and
- orthogonally in cross disposition two plug fixation holed protrusions (6) to receive in coupling said plug (A),
- the plug having
  - an overlapping edge for each connection (4') to overlap respective protrusions including each faston tongue (7) of said capacitor (B) and
  - lateral holed blisterings (3-3') for crewing fixation means on said capacitor holed protrusions (6).

FIG.1

This invention concerns an electric connection system.

In prior art tongue wire plug electric connectors are well known (faston) and these solutions are utilized for wiring electric connection of respective capacitors.

But the faston connection is generally separate [one faston (tongue plug) for each wire] and so they do not present elements for a security connection, in particular this disjoined system involving separate plug means does not allow hermetic connection and lacks in security shortcircuits being frequent in disconnection of one faston (accidental pulling) or for water infiltration.

In the electric connection systems the use of electric plug connection that includes both the positive and the negative pole is well known.

Scope of the present invention is to obviate to said drawbacks utilizing an electric positive-negative plug system.

This and other scopes are reached with this invention as claimed, by means of an electric connection system with yelding material plug for capacitors with tongue/faston characterized in that to provide in the connection head of the capacitor:

- two protruding beveled clogs from which the respective connection faston tongues extend and
- orthogonally in cross disposition two plug fixation holed protrusions to receive in coupling said plug,
- the plug having
  - an overlapping edge for each connection to overlap respective protrusions including each faston tongue of said capacitor and
  - lateral holed blisterings for crewing fixation means on said capacitor holed protrusions.

With this solution we obtain important constructive advantages as simplicity, speed connection and disconnection, unplugging security, waterproof quality.

The model is better understood with the following description and designs supplied for example only, in which:

Figure 1 represents the plugged capacitor ensemble.

Figure 2 represents top view of the plug of Figure 1.

Figure 3 represents a perspective view of the plug.

Figure 4 represents a section of the cover of the capacitor involving the female plug means according to invention.

Figure 5 represents a top view of the cover of the capacitor.

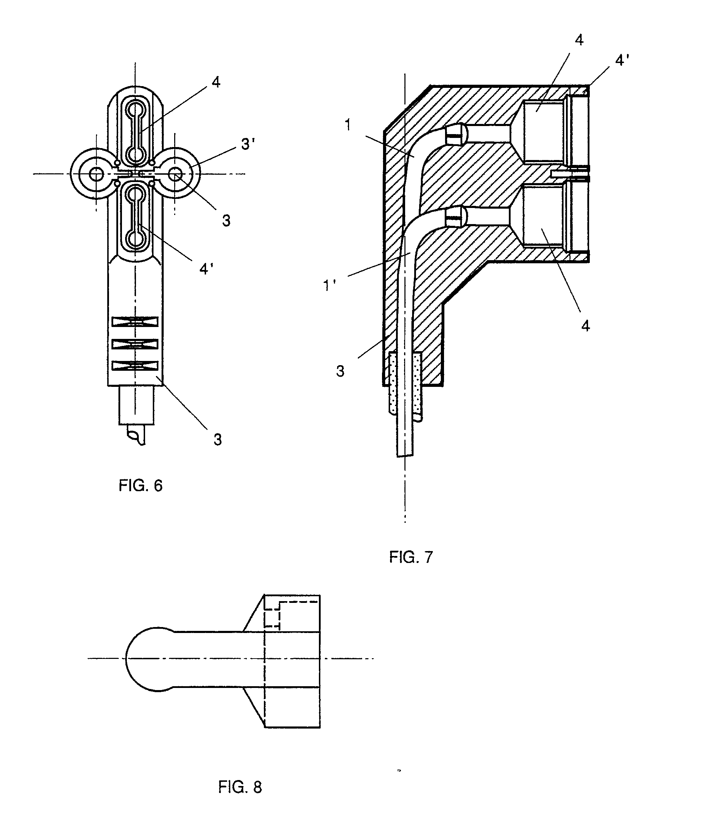

Figures 6 ,7 ,8 represent the three view of the plug, Figure 7 representing the plug in section.

The figures disclose that the capacitor presents a cover involving the two beveled clogs 7 to bear the tongues 3. This clog is very important both for the strengthening and to facilitate the bell overlapping of the plug with the scopes to avoid water infiltrations allowing secure clamping ad waterproof.

The clamping happens with screw means on the holes of the protrusions 6 while the tongue 8 act as partition element.

We appreciate that the holes of the protrusions 6 are squared in order that the plastic material deforms under the action of the autoscrewing screw to facilitate the penetration and assure a good holding.

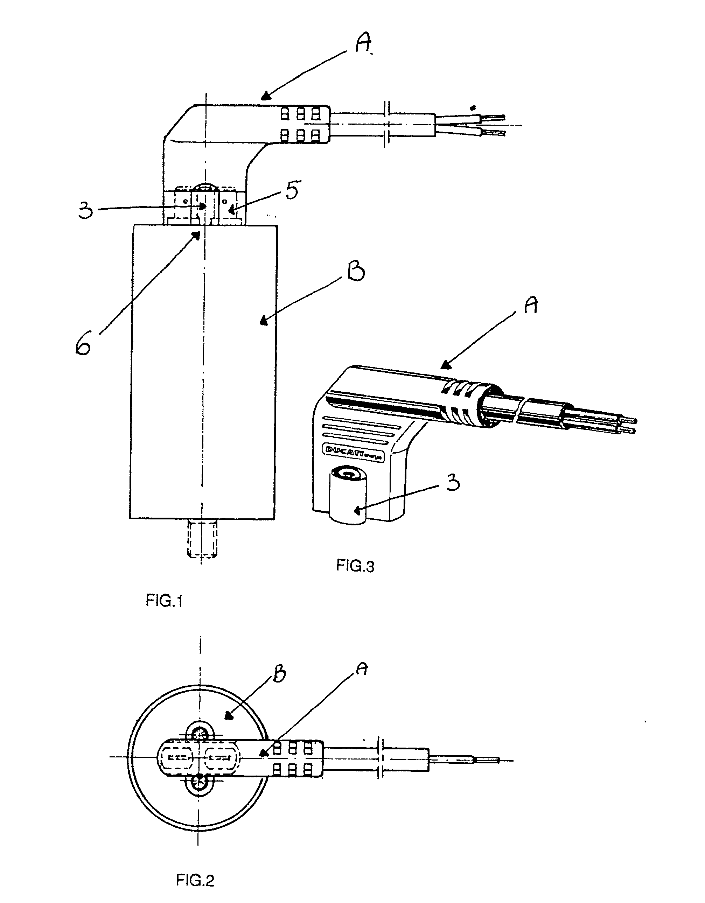

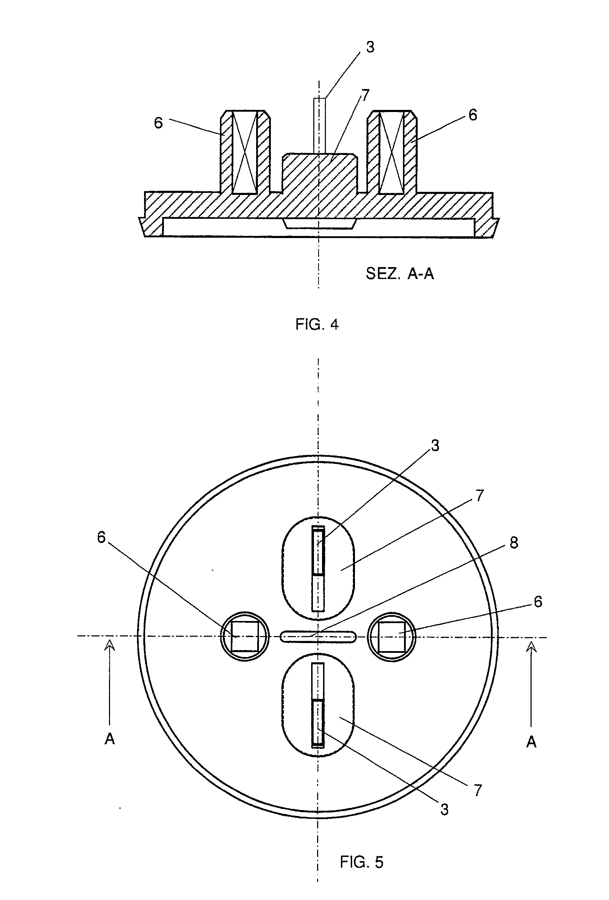

The attack is of the pipe shape which wires couple (1, 1') is integrated in a sheath (2) that is to its turn integrated with the plug or attack (s) which presents the bayonet attack seats (4) coplanar aligned (Figures 2, 3) and protrude toward the shallow with a bell edge of overlapping (4').

From one side and from the other there are two blistering (3) with holing (3') for the screw means clamping utilization on the headline supports tongues of the corresponding capacitor (not shown).

## Claims

1. An electric connection system with yelding material plug (A) for capacitors (B) with tongue/faston (7) characterized in that to provide in the connection head of the capacitor:
   - two protruding beveled clogs (7) from which the respective connection faston tongues (7) extend and
   - orthogonally in cross disposition two plug fixation holed protrusions (6) to receive in coupling said plug (A),
   - the plug having
     - an overlapping edge for each connection (4') to overlap respective protrusions including each faston tongue (7) of said capacitor (B) and
     - lateral holed blisterings (3-3') for crewing fixation means on said capacitor holed protrusions (6).

2. A connector for capacitors with tongue attack, according to claim 1, characterized in that it comprises the following characteristics:
   - the tonge-faston-female is in the plug adjacently disposed (4)
   - having a bellshaped encapsulation edge (4') for overlapping the the faston/tongue clog basis (7) of the capacitor;
   - in crossing way having two lateral holed blistering for fixation to the capacitor by means of screw means (3, 3');
   - the plug is 90° angled to the faston connection plane (4).

3. A capacitor with tongue attack, for the realization of the system according to claim 1, characterized in that it comprises the support of the tongues (7') with protruding clogs (7), and in orthogonal cross there is a protrusions fixation couple for screw means (6) of a plug (A).

A

3

5

6

B

FIG.1

A

3

FIG.3

B

A

FIG.2

SEZ. A-A

FIG. 4

FIG. 5

FIG. 6

FIG. 7

FIG. 8

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 297 645   (RIFA AB)<br>* column 3, lines 19 - 43; figures 1-4 * | 1 | H 01 G 1/14 |
| A | DE-B-2 126 400   (BOSCH)<br>* column 3, lines 1 - 7; figure 4 * | 1 | |

TECHNICAL FIELDS
SEARCHED (Int. Cl.5)

H 01 G

The present search report has been drawn up for all claims

| Place of search | Date of completion of search | Examiner |
|---|---|---|
| The Hague | 22 April 91 | CERIBELLA G. |